# EUROPÄISCHE PATENTSCHRIFT

(11) **EP 3 847 512 B1**
(45) Veröffentlichungstag und Bekanntmachung des Hinweises auf die Patenterteilung: **12.10.2022**
(21) Anmeldenummer: 19753288.0
(22) Anmeldetag: 05.08.2019
(51) Int. Cl.: G05B 19/042, B60T 17/02, G05B 23/02

(54) **SYSTEM ZUR DIAGNOSE UND ÜBERWACHUNG VON LUFTVERSORGUNGSANLAGEN UND DEREN KOMPONENTEN**
SYSTEM FOR THE DIAGNOSIS AND MONITORING OF AIR SUPPLY SYSTEMS AND COMPONENTS THEREOF
SYSTÈME POUR LE DIAGNOSTIC ET LA SURVEILLANCE D'INSTALLATIONS DE VENTILATION ET LEURS COMPOSANTS

(30) Priorität: 05.09.2018 DE 102018215108
(43) Veröffentlichungstag der Anmeldung: 14.07.2021
(73) Patentinhaber: KNORR-BREMSE Systeme für Schienenfahrzeuge GmbH, 80809 München (DE)
(72) Erfinder: HARTL, Michael, 82008 Unterhaching (DE); LINNER, Martin, 84419 Schwindeg (DE); BEHMANN, Benjamin, 81541 München (DE); VARGAS, Jaime, 80798 München (DE)
(86) Internationale Anmeldenummer: PCT/EP2019/070962
(87) Internationale Veröffentlichungsnummer: WO 2020/048704

(56) Entgegenhaltungen:
- EP-A1- 3 093 206
- WO-A1-2017/174737
- DE-A1-102013 101 502

## Beschreibung

Die Erfindung betrifft ein System zur Diagnose und Überwachung von Luftversorgungsanlagen und deren Komponenten.

Zur Zustandsüberwachung von Luftversorgungsanlagen und im speziellen deren Kompressoren von pneumatischen Bremssystemen in Schienenfahrzeugen werden im Stand der Technik in der Regel wenige einzelne Sensoren oder Schalter eingesetzt. Diese sind beispielsweise Öltemperatursensoren oder Sensoren zur Überwachung der Luftaustrittstemperatur.

Diese Bauteile dienen im Allgemeinen dazu, die Einhaltung eines zumeist sicherheitsrelevanten maximalen Grenzwertes sicherzustellen. Diese sind typischerweise maximale Temperaturwerte für die Öltemperatur oder die Bauteiltemperatur selbst. Die den Sensoren entsprechenden Auswertelogiken sind in der Regel eindimensional, sodass ein Sensorwert gegen den entsprechenden maximalen Grenzwert verglichen wird und bei Überschreitung des Grenzwertes eine Notabschaltung des Systems ausgelöst wird.

Nachteil dieses Vorgehens ist, dass keine echte Zustandsüberwachung über die Funktion einer Komponente(n) einer Luftversorgungsanlage gegeben ist. Es kann lediglich festgestellt werden, dass die Funktion nicht ordnungsgemäß durchgeführt werden kann, wenn ein Grenzwert überschritten wurde und daher eine Notabschaltung erfolgt. Es können jedoch keine Rückschlüsse über die Funktionsweise vor dem Ausfall oder über den vorliegenden Fehler gezogen werden. Um Ausfälle zu verhindern, muss somit eine Wartung nach festen Wartungsintervallen erfolgen. Dabei kann es vorkommen, dass häufige Wartung auch von Bauteilen, die zum gegebenen Zeitpunkt noch nicht gewartet werden müssten, technisch gesehen zu früh vorgenommen werden. Diese Vorgehensweise muss man somit als unwirtschaftlich bewerten.

Ein weiterer Nachteil ist, dass aufgrund der sich stetig verschärfenden Spezifikationsanforderungen an technische Anlagen, wie beispielsweise Richtlinien zur Schallemission, zur Energieeffizienz oder Ähnlichem, anforderungsgerechte Betriebsarten der Anlagen möglich gemacht und sichergestellt werden müssen. Dies ist auf der Grundlage der bisherigen Zustandsüberwachung derzeit nicht möglich.

In diesem Zusammenhang offenbart die EP 3 093 206 A1 eine Vorrichtung und ein Verfahren zum Überwachen einer Luftversorgungsanlage eines Schienenfahrzeugs, wobei leistungsabhängige Messwerte der Luftversorgungsanlage von einer Vielzahl von Messgeräten empfangen und zum Ermitteln einer Information über eine von der Luftversorgungsanlage aufgenommenen bzw. abgegebenen Leistung oder Energie ausgewertet werden.

Die WO 2017/174737 A1 offenbart eine Einrichtung zur Steuerung einer Luftversorgungsanlage eines Fahrzeuges, mit mindestens einem Verdichter zur Erzeugung von Druckluft, dessen Antrieb durch einen per Frequenzumrichter betriebenen Drehstrommotor nach Maßgabe einer zugeordneten Steuereinheit unter Berücksichtigung von Betriebszuständen des Fahrzeugs erfolgt, wobei eine übergeordnete Fahrzeugsteuereinheit verschiedene Betriebszustände des Fahrzeugs kennzeichnende Steuersignale der Steuereinheit zur Verfügung stellt.

Die DE 10 2013 101 502 A1 offenbart eine Luftversorgungsanlage umfassend einen von einem Motor angetriebenen Kompressor zur Erzeugung von Druckluft, einer Lufttrockneranlage zum Entfeuchten der erzeugten Druckluft, einen elektronischen Umrichter zur bedarfsabhängigen Kompressorsteuerung und mehrere analoge und/oder digitale Sensoren zur Generierung von elektrischen Signalen, wobei die elektrischen Signale zur Steuerung des elektronischen Umrichters und zur Überwachung und Steuerung des Kompressors nutzbar sind und in dem elektronischen Umrichter eine Verarbeitung der von den Sensoren generierten elektrischen Signale zu Bussignalen erfolgt, welche zur Auswertung an einer Busschnittstelle bereitstellbar sind.

Es ist daher Aufgabe der vorliegenden Erfindung ein System zur Diagnose und Überwachung von Luftversorgungsanlagen bereit zu stellen, die deren Zuverlässigkeit erhöht und bedarfsgerechte Wartungsintervalle für einen betriebswirtschaftlich sinnvolleren Betrieb ermöglicht.

Diese Aufgabe wird durch das erfindungsgemäße System gemäß dem unabhängigen Anspruch gelöst. Vorteilhafte Weiterbildungen der Erfindung sind Gegenstand der abhängigen Ansprüche.

Diese Aufgabe wird insbesondere gelöst durch ein Diagnosesystem für Luftversorgungsanlagen, das es ermöglicht, Veränderungen am Zustand und in der Funktion einer Luftversorgungsanlage und deren Komponenten zu erfassen, um anhand dieser Informationen optimale Betriebsarten wählen zu können um einerseits die Funktion des Gesamtsystems aufrecht zu erhalten und andererseits äußeren Spezifikationsanforderungen gerecht werden zu können.

Mit den gewonnenen Informationen ist es somit ebenfalls möglich Wartungsintervalle nicht länger starr zu organisieren sondern am Zustand der einzelnen Komponenten orientiert lediglich bei Bedarf durchzuführen.

Das erfindungsgemäße System weist einen Kompressor zur Bereitstellung von Druckluft für das System auf, einen Lufttrockner, um der verdichteten Luft Feuchtigkeit zu entziehen, mindestens zwei Sensoren, wobei ein Sensor ein Zustandssignal der Luftversorgungsanlage und der andere Sensor ein Referenzsignal erfasst, sowie eine Auswerteeinheit, zur Auswertung der durch die Sensoren erfassten Daten durch Vergleiche zwischen dem Zustandssignal und dem Referenzsignal, wobei die Auswerteeinheit weiterhin dazu konfiguriert ist, die Sensorsignale anhand einer Auswertelogik in Wartungs- und/oder Steuersignale umzuwandeln, die wiederum die Betriebsart oder das Wartungsintervall der Luftversorgungsanlage steuern.

Erfindungsgemäß erfassen die Sensoren als Referenzsignal die Temperatur am Kühllufteintritt und als Zustandssignal eine Bauteiltemperatur, wie beispielsweise die Temperatur einer Zylinderwand des Kompressors, oder eine Öltemperatur, und/oder als Referenzsignal die Temperatur der Luft beim Prozesseintritt und als Zustandssignal die Bauteiltemperatur, Lufttemperatur am Austritt oder die Öltemperatur, und/oder als Referenzsignal den Ansaugdruck und als Zustandssignal den Zwischendruck oder einen nach der letzten Verdichterstufe anliegenden Enddruck, und/oder als Referenzsignal die Lufttemperatur und als Zustandssignal den Drucktaupunkt aufgrund der gemessenen Werte zur Luftfeuchtigkeit und der Temperatur der verdichteten Prozessluft im Kompressor.

In einer vorteilhaften Ausführungsform der Erfindung erfassen die Sensoren je nach Art des Kompressors Bauteil und Prozessgrößen wie eine Kühllufttemperatur, eine Ansaugtemperatur, eine Zylinderwandtemperatur eines Zylinders des Kompressors, eine Öltemperatur, eine Ausgangstemperatur, den Enddruck und/oder den Ansaugunterdruck, um auf Basis dieser Parameter eine Zustandsüberwachung und eine Steuerung eines Kompressorumrichters, der eine Frequenz und eine Amplitude der am Kompressor anliegenden Spannung und damit die Betriebsgrößen des Kompressors einstellt, durchzuführen.

Zudem weist die Erfindung in einer vorteilhaften Ausführungsform eine Datenübertragungseinheit auf, die die Sensordaten bereits in einer fahrzeugseitigen, also im Fahrzeug befindlichen, ersten Stufe ausgewerteten Informationen zusammen mit für die Auswertung ebenfalls relevanter Fahrzeuginformationen, an eine wegseitige, also sich nicht im Fahrzeug befindliche, Vorrichtung zur Datenverarbeitung übermittelt, damit die Daten dort weiter ausgewertet werden können. Die Verarbeitung der Daten erfolgt in dieser Ausführungsform also mehrstufig sequentiell nacheinander. Je nach Art und Komplexität der Auswertung können verschiedene Aufgaben somit von unterschiedlichen Vorrichtungen übernommen werden.

Vorteil der mehrstufigen Auswertung ist beispielsweise, dass die fahrzeugseitige Auswerteeinheit lediglich über eine vergleichsweise geringe Rechenleistung verfügen muss. Die Rechenleistung einer zentralen Auswerteeinheit hingegen ist bei Bedarf einfacher zu erweitern. Zudem ist eine Berücksichtigung weiterer Daten, die im Fahrzeug selbst nicht zugänglich sind, wie beispielsweise die Daten anderer Fahrzeuge, möglich und somit kann eine umfangreichere Auswertung erfolgen. So kann mit einer zentralen wegseitigen Auswerteeinheit beispielsweise ähnliche Fahrzeugkonstellationen weltweit verglichen werden. Damit kann die zentrale Auswerteeinheit für den jeweiligen Auswertungsfall von anderen Fahrzeugen bzw. Fahrzeugflotten lernen, falls gleiche Probleme generell auftreten, dem einzelnen Fahrzeug aber nicht bekannt sind. Somit steht der Auswertung eine deutlich größere Datenmenge zur Verfügung, um mögliche Fehler im Vorhinein zu detektieren.

In der im Absatz zuvor beschriebenen vorteilhaften Ausführungsform ist die wegseitige Vorrichtung zur Datenverarbeitung als Teil des Systems zu sehen und weist wenigstens eine Datenbank und/oder einen Webserver auf.

In der in den beiden Absätzen zuvor beschriebenen vorteilhaften Ausführungsform erfolgt die Kommunikation vorzugsweise über WLAN und/oder Mobilfunk, um einen zügigen und über größere Distanzen funktionierenden Datenaustausch zu gewährleisten.

In einer weiteren vorteilhaften Ausführungsform ist die wegseitige Vorrichtung dazu konfiguriert, die Daten von verschiedenen Fahrzeugen langfristig speichern zu können, und weist eine Ausgabeeinheit auf, um die Daten an Bediener gesammelt ausgeben zu können.

In einer weiteren vorteilhaften Ausführungsform sind die Sensoren und die fahrzeugseitige Auswerteeinheit in einem Can-Bus-Netzwerk angeordnet, wobei die Auswerteeinheit als Busmaster fungiert, oder einem Ethernet. Falls nötig weisen die Sensoren Signalwandler auf, die die Signale derart wandeln, damit sie in dem entsprechenden Netzwerk übermittelt werden können. Die Sensorsignale werden dabei vorzugsweise über geschirmte Leitungen von den Sensoren zu der Auswerteeinheit geführt.

Des Weiteren weist das System in einer weiteren vorteilhaften Ausführungsform an den stellen an denen ein Signal gewandelt werden muss Signalwandler auf, die beispielsweise die Sensorsignale zur Übertragung an die Auswerteeinheit oder zur Übertragung an die wegseitige Datenempfangseinheit umwandeln. Müssen Signale zur Übertragung zwischen unterschiedlichen Bestandteilen des Systems häufiger gewandelt werden, so sind entsprechend mehrere Signalwandler vorgesehen. Diese können bereits in den Sensoren integriert ausgeführt sein.

In einer weiteren vorteilhaften Ausführungsform der Erfindung ist das System im zentralen Bremssteuergerät implementiert. Der Auswerteeinheit sind somit zusätzlich weitere Diagnose- und Steuersignale des Fahrzeugs, wie beispielsweise Daten des Frequenzumrichters des Kompressors der Luftversorgungsanlage, Wetterdaten oder Informationen über den aktuellen Fahrzeugbetrieb zugänglich.

Eine Ausführung der Erfindung wird im Folgenden anhand der beiden **Figuren** näher erläutert.
- **Fig 1**: zeigt eine schematische Darstellung einer Ausführungsform der Erfindung, wobei die Darstellung auf die Überwachung des Kompressors einer Luftversorgungsanlage beschränkt ist.
- **Fig. 2**: zeigt eine Ausführungsform einer möglichen Anordnung der Sensoren zur Überwachung des Kompressors einer Luftversorgungsanlage

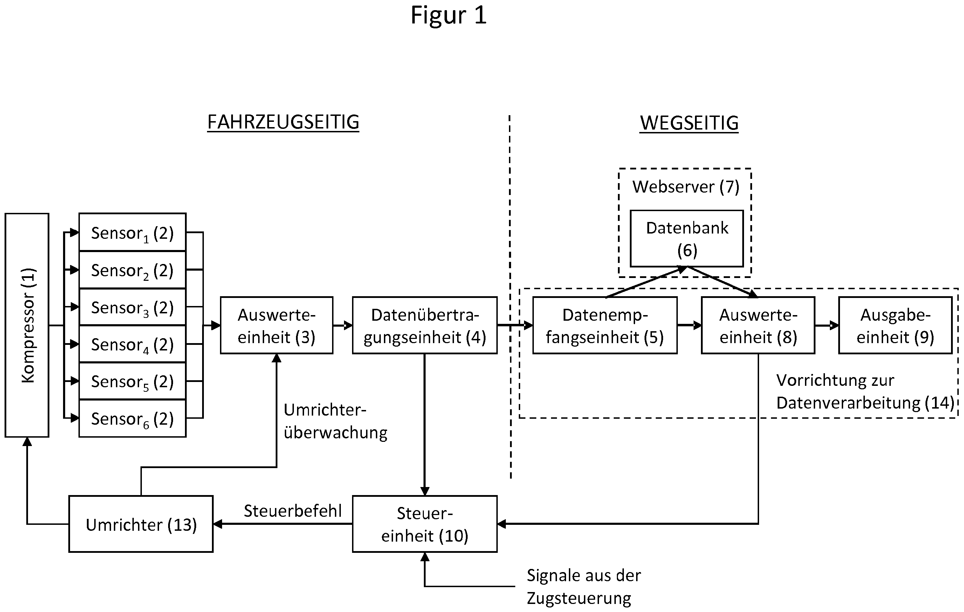

Sensoren 2 in **Fig 1** erfassen die betriebsrelevanten Temperaturen und Drücke eines Kompressors 1. Dabei ermittelt ein Teil der Sensoren Zustandssignale des Kompressors 1, wie beispielsweise eine Zylinderwandtemperatur, eine Öltemperatur, einen Zwischendruck zwischen zwei Verdichterstufen, einen Enddruck nach der letzten Verdichterstufe oder indirekt einen Drucktaupunkt anhand der gemessenen Werte zur Luftfeuchtigkeit und der Temperatur der Luft im Kompressor. Der andere Teil der Sensoren erfasst Parameter deren Messsignale als Referenzsignale dienen. Diese sind beispielsweise die Außenlufttemperatur, die Ansauglufttemperatur, die Kühllufttemperatur oder der Ansaugdruck. Die Sensorik ist dabei so aufgebaut, dass zu jedem Zustandssignal ein Referenzsignal gleichen Typs erfasst wird. Dabei kann ein Referenzsignal auch für mehrere Zustandssignale als Referenz dienen.

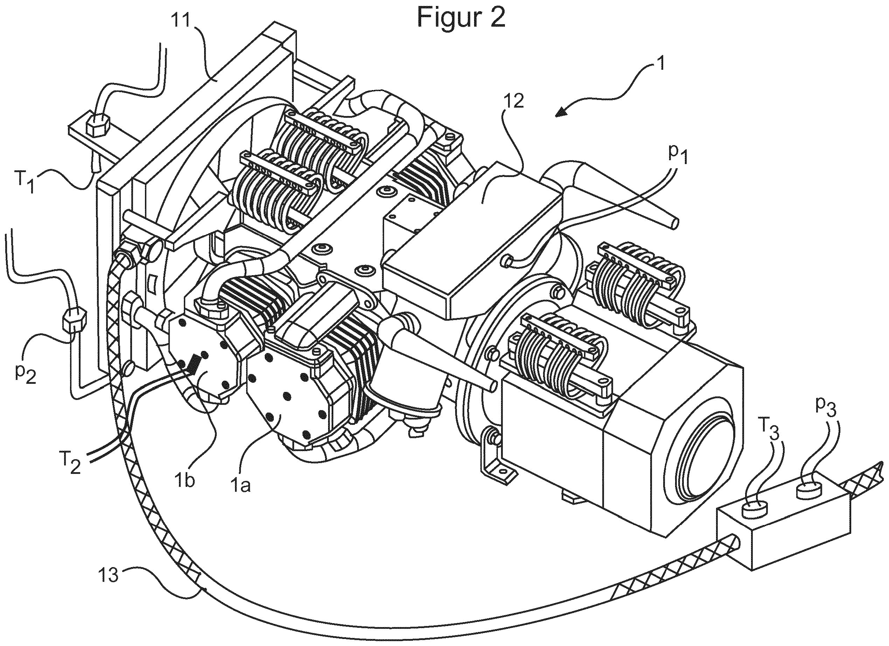

Eine Beschreibung einer beispielhaften Anordnung von einer Auswahl von Sensoren wird untenstehend anhand **Fig. 2** erläutert.

Ferner ist eine Auswerteeinheit 3 vorgesehen, die die ermittelten Signale der Sensoren 2 auswertet. Die Sensoren 2 und die Auswerteeinheit 3 sind dabei in einem (nicht gezeigten) CAN-Bus-Netzwerk angeordnet, wobei die Auswerteeinheit 3 den CAN-BusMaster darstellt. Zur Übergabe der Sensordaten werden die Signale durch Signalwandler in CAN-Bus-Signale umgewandelt.

In der Auswerteeinheit 3 können einfache Auswertevorgänge wie beispielsweise Vergleiche zwischen einem Zustandssignal und einem Referenzsignal oder Vergleiche zwischen einem Zustandssignal und einem entsprechenden Maximalwert vorgenommen werden. Die Ergebnisse dieser Vergleich werden zusammen mit allen fahrzeugrelevanten Daten, beziehungsweise alle erfassten Sensorsignale, an eine Datenübertragungseinheit 4 weitergegeben.

Diese leitet die Daten entweder an eine Steuereinheit 10 einer Luftversorgungsanlage oder an eine wegseitige Datenempfangseinheit 5 weiter. Die Steuereinheit 10 verarbeitet die Informationen zu Steuerbefehlen an die Luftversorgungseinheit und somit an den Kompressor 1, wodurch Änderungen in der Betriebsart des Kompressors 1 über eine Ansteuerung eines Umrichters 13 des Kompressors 1 umgesetzt werden können. Zudem kann die Auswerteeinheit 3 ebenso auf interne Signale einer Umrichterüberwachung wie zum Beispiel der Umrichtertemperatur und der Stromaufnahme zurückgreifen. Somit kann schnell und kurzfristig auf unvorhergesehene Situationen reagiert und Folgen für das Betriebsverhalten abgeleitet werden.

Durch die Integration der Steuereinheit in eine vollständige Zugsteuerung, können für den Fall eines unausweichlichen Notbetriebs die Signale der Diagnoseeinrichtung durch Signale aus der Zugsteuerung überstimmt werden. Eine Gewichtung der Signale ist also in der Steuereinheit möglich.

Durch das Übermitteln der Daten an eine Datenempfangseinheit 5 einer wegseitigen Vorrichtung zur Datenverarbeitung (14) können die Daten zudem langfristig in einer Datenbank und in der vorliegenden Ausführungsform über einen Webserver 7 verschiedenen Nutzern zugänglich gemacht werden.

Des Weiteren gelangen die Daten von der Datenempfangseinheit 5 zu einer zentralen wegseitigen Auswerteeinheit 8. Diese hat ebenfalls Verbindung zur Datenbank des Webservers 7 und somit auch Zugriff auf zusätzliche Informationen, die nicht durch die Sensoren des Fahrzeuges erfasst wurden. Anhand dieser zusätzlichen Informationen und einfach erweiterbarer Rechenleistung, beispielsweise in einem Rechenzentrum, kann eine umfassendere Auswertung der Daten vorgenommen werden.

Die Ergebnisse dieser Auswertung werden anschließend über eine Ausgabeeinheit 9 der wegseitigen Vorrichtung zur Datenverarbeitung (14) an die Nutzer ausgegeben beziehungsweise über eine in der Steuereinheit 10 integrierte Empfangseinheit zurück an die Steuereinheit 10 gesendet, die wiederum eine Änderung der Betriebsstrategie des Kompressors 1 veranlasst.

Erkennt das System beispielsweise, dass die Gefahr einer Überschreitung der Maximaltemperatur eines Zylinders eines Kolbenkompressors oder der Öltemperatur eines Schraubenkompressors droht, so kann die Steuereinheit 10 die Drehzahl des Kompressors verringern, damit der weitere Temperatureintrag ins System reduziert wird und die zulässigen Temperaturen eingehalten werden und ein minimal erforderlicher Systemdruck trotzdem sichergestellt werden kann.

Bei Kompressoren bei denen aufgrund von geringem Luftbedarf die Betriebstemperatur nicht erreicht wird und dadurch die Gefahr einer Kompressorschädigung durch Wasseransammlungen im Öl bestehen, ermöglicht die Kombination von Kompressorüberwachung und Steuereinheit die Möglichkeit eine Drehzahlerhöhung des Kompressors 1 einzusteuern. Somit wird der Kompressor am oberen zulässigen Druckniveau betrieben, wodurch das erhöhte Temperaturniveau zur Verdampfung des Wassers schneller erreicht wird. Gleichzeitig wird ein Ventil geöffnet, um das Druckniveau im Fahrzeug selbst nicht weiter zu erhöhen, und damit das Wasser in Form von Wasserdampf möglichst schnell aus dem System gelangen kann. Durch die Drehzahlerhöhung kann also, durch das schnellere Austragen des Wassers, die Gefahr einer Kompressorschädigung durch Wasseransammlungen im Öl schneller beseitigt werden, als beim Betrieb mit niedrigerer Drehzahl. Ebenso kann im Bedarfsfall die Kühlleistung der elektrischen Lüfter zur Kühlung von Kompressor oder Umrichter erhöht oder auch reduziert werden. Somit können sowohl betriebsbedingte als auch externe Einflüsse gezielt erkannt werden und bedarfsgerechte Gegenmaßnamen ergriffen werden.

Es sei darauf hingewiesen, dass in anderen Ausführungsformen die Auswertung der Sensordaten ausschließlich fahrzeugseitig, also im Fahrzeug selbst, oder ausschließlich wegseitig, also außerhalb des Fahrzeugs, erfolgen kann.

**Fig. 2** zeigt eine mögliche Anordnung verschiedener Sensoren zur Überwachung eines Kompressors 1 einer Luftversorgungsanlage. In der dargestellten Ausführungsform ist der Kompressor 1 ein zweistufiger Kolbenkompressor zwei Zylinderköpfen 1a und 1b auf der einen und einem weiteren Zylinderkopf auf der anderen Seite. Unmittelbar neben den Zylindern des Kompressors ist auf der einen Seite ein Lüfter 11 angeordnet, der die Zylinder1 mit Umgebungsluft kühlt. Auf der anderen Seite ist ein Luftansaugkasten 12 des Kompressors 1 dargestellt. Die Zylinder werden von einem Motor betrieben, der sich am gegenüberliegenden Ende zum Lüfter 11 des Kompressors befindet. Auf der Seite mit einem Zylinder befindet sich ein in der dargestellten Perspektive schwer zu erkennender Niederdruckzylinder. Auf der Seite mit zwei Zylindern ist der vordere, lüfterseitige, kleinere Zylinder ein Hochdruckzylinder (1b), der hintere, motorseitige Zyliner ebenfalls ein Niederdruckzylinder (1a).

Beim Blick von vorne auf den Kühler, ist dieser horizontal geteilt. Im unteren Bereich befindet sich der Druck der ersten Verdichtung durch die beiden Niederdruckzylinder (Zwischendruck), im oberen Bereich der Druck nach der zweiten Verdichtung (Systemdruck, Enddruck).

Ein unmittelbar vor dem Lüfter 11 angeordneter Temperatursensor misst die Temperatur der Umgebungsluft unmittelbar vor dem Eintritt in den Lüfter 11. Diese Umgebungslufttemperatur stellt somit die Kühllufttemperatur T₁ des Systems dar. Ein weiterer Temperatursensor misst die Temperatur T₂ an der Zylinderwand 1b. Ein dritter Temperatursensor misst schließlich die Temperatur der verdichteten Luft nach Austritt aus dem Kompressor und vor dem Eintritt in einen nicht dargestellten Lufttrockner. Der Schlauch 13 stellt dabei die Verbindung zwischen Kompressor 1 und Lufttrockner dar. Diese Temperatur ist also die Lufttrocknereintrittstemperatur T₃.

Ein Drucksensor misst im Luftansaugkasten 12 den Ansaugunterdruck p₁, während ein weiterer Drucksensor im Zwischenkreis zwischen den beiden Verdichterstufen des zweistufigen Kolbenkompressors den Zwischenkreisdruck p₂ misst. Analog zur Messung der Lufttrocknereintrittstemperatur T₃, misst ein dritter Drucksensor den Enddruck p₃ nach dem Austritt der Luft aus dem Kompressor und vor dem Eintritt in den nicht dargestellten Lufttrockner.

Anhand dieser Messsignale können Wertepaare aus Zustandssignal und Referenzsignal zur Überwachung des Kompressors 1 gebildet werden. Dabei kann die Luftansaugtemperatur T₁ als Referenzsignal und die Zylinderwandtemperatur T₂ sowie die Lufttrocknereintrittstemperatur T₃ als Zustandssignal dienen. Analog dazu kann der Ansaugunterdruck p₁ als Referenzsignal und der Zwischenkreisdruck p₂ beziehungsweise der Enddruck p₃ als Zustandssignal definiert werden.

### BEZUGSZEICHENLISTE

- 1: Kompressor
- 1a: Zylinderkopf Kompressorstufe a
- 1b: Zylinderkopf Kompressorstufe b
- 2: Sensor
- 3: (fahrzeugseitige) Auswerteeinheit
- 4: Datenübertragungseinheit
- 5: Datenempfangseinheit
- 6: Datenbank
- 7: Webserver
- 8: (wegseitige) Auswerteeinheit
- 9: Ausgabeeinheit
- 10: Steuereinheit
- 11: Lüfter
- 12: Luftansaugkasten
- 13: Schlauch

- T₁: Kühllufttemperatur
- T₂: Zylinderwandtemperatur
- T₃: Lufttrocknereintrittstemperatur
- p₁: Ansaugunterdruck
- p₂: Zwischenkreisdruck
- p₃: Enddruck

## Patentansprüche

1. System zur Diagnose und Überwachung von Luftversorgungsanlagen aufweisend:
einen Kompressor (1), dazu konfiguriert, Druckluft bereit zu stellen,
einen Lufttrockner, dazu konfiguriert, der verdichteten Luft im System Feuchtigkeit zu entziehen,
**dadurch gekennzeichnet, dass** das System weiterhin umfasst: mindestens zwei Sensoren (2), wobei ein Sensor (2) dazu konfiguriert und angeordnet ist, ein Zustandssignal eines zu überwachenden Bauteils zu erfassen, und ein anderer Sensor (2) dazu konfiguriert und angeordnet ist, ein Referenzsignal hinsichtlich des zu überwachenden Bauteils zu erfassen,
eine Auswerteeinheit (3), dazu konfiguriert, die Signale der Sensoren (2) durch Vergleiche zwischen dem Zustandssignal und dem Referenzsignal auszuwerten, wobei
die Auswerteeinheit (3) weiterhin dazu konfiguriert ist, die Sensorsignale anhand einer Auswertelogik in Wartungs- und/oder Steuersignale umzuwandeln, die die Betriebsart der Luftversorgungsanlage steuern, und
wobei die Sensoren (2) dazu konfiguriert und angeordnet sind, als Referenzsignal die Temperatur am Kühllufteintritt und als Zustandssignal eine Bauteiltemperatur oder eine Öltemperatur, und/oder als Referenzsignal die Temperatur der Luft beim Prozesseintritt und als Zustandssignal die Bauteiltemperatur oder die Öltemperatur, und /oder als Referenzsignal den Ansaugdruck und als Zustandssignal den Zwischendruck oder den Enddruck, und/oder als Referenzsignal die Lufttemperatur und als Zustandssignal den Drucktaupunkt aufgrund der gemessenen Werte zur Luftfeuchtigkeit und der Temperatur der Luft im Kompressor zu ermitteln.

2. System gemäß Anspruch 1, wobei mindestens einer der Sensoren (2) so konfiguriert und angeordnet ist, dass er je nach Art des Kompressors (1) eine Kühllufttemperatur, eine Ansaugtemperatur, eine Zylinderwandtemperatur, die Öltemperatur, den Enddruck und/oder einen Ansaugunterdruck zur Zustandsüberwachung und Steuerung des Kompressors (1) erfasst.

3. System gemäß einem der vorhergehenden Ansprüche, wobei das System eine Datenübertragungseinheit (4) aufweist, die dazu konfiguriert ist, ausgewertete oder unausgewertete Informationen von einem Fahrzeug zu einer wegseitigen Vorrichtung zur Datenverarbeitung (14) zu übermitteln.

4. System gemäß dem vorhergehenden Anspruch, wobei die Auswerteeinheit (3) fahrzeugseitig vorgesehen ist und das System die fahrzeugseitige Auswerteeinheit (3) und eine wegseitige Vorrichtung zur Datenverarbeitung (14) aufweist, die dazu konfiguriert sind, die Auswertung der Sensorsignale in einer erste Stufe durch die fahrzeugseitige Auswerteeinheit (3) und in einer weiteren Auswertung durch die wegseitige Vorrichtung mehrstufig auszuführen.

5. System gemäß einem der beiden vorhergehenden Ansprüche, wobei die wegseitige Vorrichtung zur Datenverarbeitung (14) Teil des Systems ist und wenigstens eine Datenbank und/oder einen Webserver (7) aufweist.

6. System gemäß einem der vorhergehenden Ansprüche 3 bis 5, wobei das System derart konfiguriert ist, dass die Datenübertragung zwischen dem Fahrzeug und der wegseitigen Vorrichtung zur Datenverarbeitung (14) mittels WLAN und/oder Mobilfunk durchgeführt wird.

7. System gemäß dem vorhergehenden Anspruch 5, wobei die wegseitige Vorrichtung zur Datenverarbeitung dazu konfiguriert ist, die Daten von unterschiedlichen Diagnosesystemen von unterschiedlichen Fahrzeugen zu sammeln, und eine Ausgabeeinheit (9) aufweist, die dazu konfiguriert ist, die Daten von unterschiedlichen Fahrzeugen zusammen auszugeben.

8. System gemäß einem der vorhergehenden Ansprüche, wobei ein Can-Bus-Netzwerk oder ein Ethernet vorgesehen ist und die Sensoren (2) und die Auswerteeinheit (3) in dem Can-Bus-Netzwerk beziehungsweise dem Ethernet angeordnet sind und die Auswerteeinheit (3) im Can-Bus-Netzwerk dazu konfiguriert ist als Busmaster zu fungieren, wobei die Sensoren (2) Signalwandler aufweisen, die konfiguriert sind, die Signale derart zu wandeln, dass sie dazu geeignet sind in dem entsprechenden Netzwerk , beziehungsweise an die wegseitige Auswerteeinheit übertragen zu werden.

9. System gemäß einem der vorhergehenden Ansprüche, wobei das System einen Signalwandler aufweist, der dazu konfiguriert ist, die Sensorsignale zur Übertragung an die Auswerteeinheit (3) umzuwandeln.

10. System gemäß einem der vorhergehenden Ansprüche, wobei die fahrzeugseitige Auswerteeinheit (3) in einem zentralen Bremssteuergerät implementiert ist.

## Claims

1. System for the diagnosis and monitoring of air supply systems, comprising:
a compressor (1) configured to provide compressed air,
an air drier configured to extract moisture from the compressed air in the system,
**characterised in that** the system further comprises:
at least two sensors (2), wherein one sensor (2) is configured and arranged so as to sense a status signal of a component to be monitored, and another sensor (2) is configured and arranged so as to sense a reference signal relating to the component to be monitored,
an evaluation unit (3) configured to evaluate the signals of the sensors (2) by comparisons between the status signal and the reference signal, wherein
the evaluation unit (3) is also configured to convert the sensor signals, using an evaluation logic, into maintenance and/or control signals which control the method of operation of the air supply installation, and
wherein the sensors (2) are configured and arranged to determine the temperature at the cooling air inlet as a reference signal and a component temperature or an oil temperature as a status signal and/or the temperature of the air at the process inlet as a reference signal and the component temperature or the oil temperature as a status signal and/or the intake pressure as a reference signal and the intermediate pressure or the final pressure as a status signal and/or the air temperature as a reference signal and the pressure dew point as a status signal on the basis of the measured values relating to the air humidity and the temperature of the air in the compressor.

2. System according to claim 1, wherein at least one of the sensors (2) is configured and arranged in such a way that, depending on the type of compressor (1), said sensor (2) senses a cooling air temperature, an intake temperature, a cylinder wall temperature, the oil temperature, the final pressure and/or an intake negative pressure for monitoring the status and for controlling the compressor (1).

3. System according to any of the preceding claims, wherein the system has a data transmission unit (4) which is configured to transfer evaluated or non-evaluated information from a vehicle to a route-side data processing device (14).

4. System according to any of the preceding claims, wherein the evaluation unit (3) is provided at the vehicle and the system has a route-side data processing device (14), which devices are configured to carry out the evaluation of the sensor signals in multiple stages, in a first stage by the vehicle-side evaluation unit (3) and in a further evaluation by the road-side device.

5. System according to any of the preceding claims, wherein the route-side data processing device (14) is part of the system and has at least one database and/or one web server (7).

6. System according to any of the preceding claims 3 to 5, wherein the system is configured in such a way that the transmission of data between the vehicle and the route-side data processing device (14) is carried out by means of WLAN and/or mobile radio.

7. System according to claim 5, wherein the route-side data processing device is configured to collect the data from different diagnostic systems of different vehicles, and has an output unit (9) which is configured to output the data of different vehicles together.

8. System according to any of the preceding claims, wherein a CAN bus network or an Ethernet is provided and the sensors (2) and the evaluation unit (3) are arranged in the CAN bus network or the Ethernet, and the evaluation unit (3) in the CAN bus network is configured to function as a bus master, wherein the sensors (2) have signal converters which are configured to convert the signals in such a way that they are suitable to be transmitted in the corresponding network, or to the route-side evaluation unit.

9. System according to any of the preceding claims, wherein the system has a signal converter which is configured to convert the sensor signals for transmission to the evaluation unit (3).

10. System according to any of the preceding claims, wherein the vehicle-side evaluation unit is implemented in a central brake control device.

## Revendications

1. Système de diagnostic et de contrôle d'installations d'alimentation en air, comportant :
un compresseur (1), qui est configuré pour mettre de l'air comprimé à disposition,
un sécheur d'air, qui est configuré pour retirer de l'humidité de l'air comprimé du système,
**caractérisé en ce que** le système comprend en outre :
au moins deux capteurs (2), dans lequel un capteur (2) est configuré et disposé, de manière à détecter un signal d'état d'une pièce à contrôler, et un autre capteur (2) est configuré et disposé pour détecter un signal de référence en ce qui concerne la pièce à contrôler,
une unité (3) d'analyse configurée pour analyser les signaux des capteurs (2) par comparaison entre le signal d'état et le signal de référence, dans lequel
l'unité (3) d'analyse est configurée en outre pour transformer les signaux de capteur, à l'aide d'une logique d'analyse, en signaux d'entretien et/ou de commande, qui commande le type de fonctionnement de l'installation d'alimentation en air, et
dans lequel les capteurs (2) sont configurés et disposés pour déterminer comme signal de référence la température à l'entrée de l'air de refroidissement et comme signal d'état une température de la pièce ou une température de l'huile et/ou comme signal de référence la température de l'air à l'entrée du processus et comme signal d'état la température de la pièce ou la température de l'huile et/ou comme signal de référence la pression d'aspiration et/ou comme signal d'état la pression intermédiaire ou la pression finale et/ou comme signal de référence la température de l'air et comme signal d'état le point de rosée sous pression, sur la base des valeurs mesurées d'humidité de l'air et de la température de l'air dans le compresseur.

2. Système suivant la revendication 1, dans lequel au moins l'un des capteurs (2) est configuré et disposé, de manière à détecter, suivant le type du compresseur (1), une température de l'air de refroidissement, une température d'aspiration, une température de paroi de cylindre, la température de l'huile, la pression finale et/ou une dépression d'aspiration, pour le contrôle d'état et la commande du compresseur (1).

3. Système suivant l'une des revendications précédentes, dans lequel le système a une unité (4) de transfert de données, qui est configurée pour transmettre des informations analysées ou non analysées d'un véhicule à une installation du côté de la voie, pour le traitement (14) de données.

4. Système suivant la revendication précédente, dans lequel l'unité (3) d'analyse est prévue du côté du véhicule et le système a l'unité (3) d'analyse du côté du véhicule et une installation du côté de la voie, pour le traitement (14) de données, qui sont configurées pour effectuer en plusieurs stades l'analyse des signaux de capteur dans un premier stade par l'unité (3) d'analyse du côté du véhicule, et dans une autre évaluation, par l'installation du côté de la voie.

5. Système suivant l'une des deux revendications précédentes, dans lequel l'installation du côté de la voie pour le traitement (14) de données fait partie du système et a au moins une base de données et/ou un serveur (7) de toile.

6. Système suivant l'une des revendications 3 à 5 précédentes, dans lequel le système est configuré pour effectuer le transfert de données entre le véhicule et l'installation du côté de la voie pour le traitement (14) de données, au moyen de WLAN et/ou de la téléphonie mobile.

7. Système suivant la revendication 5, dans lequel l'installation du côté de la voie pour le traitement de données est configurée pour rassembler les données de systèmes de diagnostic différents de véhicules différents et a une unité (9) de sortie, qui est configurée pour sortir ensemble les données de véhicules différents.

8. Système suivant l'une des revendications précédentes, dans lequel il est prévu un réseau can-bus ou un internet et les capteurs (2) et l'unité (3) d'analyse sont disposés dans le réseau can-bus ou respectivement dans l'internet, et l'unité (3) d'analyse dans le réseau can-bus est configurée pour fonctionner en maître bus, les capteurs (2) ayant des transformateurs de signaux, qui sont configurés pour transformer les signaux, de manière à ce qu'ils soient appropriés pour être transmis dans le réseau correspondant ou respectivement à l'unité d'analyse du côté de la voie.

9. Système suivant l'une des revendications précédentes, dans lequel le système a un transformateur de signaux, qui est configuré pour transformer les signaux de capteur pour la transmission à l'unité (3) d'analyse.

10. Système suivant l'une des revendications précédentes, dans lequel l'unité (3) d'analyse du côté du véhicule est mise en œuvre dans un appareil central de commande de freinage.
